(19) Europäisches Patentamt / European Patent Office / Office européen des brevets

(11) **EP 1 992 886 A2**

(12) **EUROPEAN PATENT APPLICATION**

(43) Date of publication:
**19.11.2008 Bulletin 2008/47**

(51) Int Cl.:
***F24J 3/08*** (2006.01)

(21) Application number: **08008695.2**

(22) Date of filing: **06.05.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **16.05.2007 IT AN20070028** | (71) Applicant: **Energy Resources srl**<br>**60020 Ancona (IT)**<br><br>(72) Inventors:<br>• **Mainardi, Emanuele**<br>  **60127 Ancona (DE)**<br>• **Cappanera, Enrico**<br>  **60126 Ancona (IT)**<br>• **Lucchetti, Luigi**<br>  **60124 Ancona (IT)** |

(54) **Compact geothermal heat exchanger, spiral shaped**

(57)     Geothermal heat exchange (probe) consisting of PEAD (or other suitable material) pipeline spiral shaped and works assembled.

The probe may also be placed into metallic cages used for the foundation pile framework, thus creating an innovative "energy pile."

The probe, during the construction, stocking and transportation phase, is closed and all the coils are set near, while during the installation it stretches out to the hole length simply as a consequence of to the effect of gravity. The maximum distance between coils is limited by spacer which are also assembled during construction.

The invention deeply reduces construction and installation costs and timing if compared to commonly used methods

Fig.1

EP 1 992 886 A2

**Description**

This patent application is partly the continuation of the application AN2006A000063 dated 23/11/2006.

BACKGROUND OF THE INVENTION

1. FIELD OF THE INVENTION

The invention refers to geothermal heat exchanger probes and to related spiral shaped pipeline whose coils can be spaced during installation.

2. DESCRIPTION OF RELATED ART

The Earth capacity of maintaining a constant temperature all the year long in the layers immediately under its surface is well known. At 5-6 meters depth the soil absorbs heath during Winter and releases it during Summer. Going more deeply the temperature raises due to conduction through the soil of the heath generated by the magma stratus. In the past, several solutions to better exploit this natural energy resource have been studied and patented. Patent US4741388 by Kuroiwa, registered in the United States in 1985, is related to a thermal exchanger probe consisting in an insulating tube running vertically in the ground hole.

The thermal exchange occurs thanks to a spiral pipe pair set by the hole external wall and joined to the former tube at the bottom of the hole. The patent introduces therefore the spiral form for the exchanger pipe in order to increase the working area and consequently the efficiency.

With patent US5623986 of 1997 and its continuation in patent US5816314 dated 1998, Wings faces installation problems and the system for maintaining the right distances between coils, introducing an additional component consisting in a void unyielding core, co-axial placed in respect of the hole, and build to allow the yielding of the exchange pipe around it and the setting of the same inside the tube connected to the whole loop.

TECHNICAL PROBLEM TO SOLVE

The previous patent application AN2006A000063 was related to the method for building a geothermal exchanger probe to be assembled on site along with a metal-cage having the function of maintaining a fixed distance (spire pitch) among the spires. The present application eliminates the metal-cage.

Efforts have been made to achieve an important improvement which has as consequence the possibility to transport the probe with closed coils thus deeply reducing the volume. The objective is to space the spires during installation in a simple way.

BRIEF SUMMARY OF THE INVENTION

The probe object of the present invention has a diameter variable from 20 cm to more than 100 cm and a depth in work variable from 3m to more than 30m. The nominal diameter of the PEAD pipeline may vary from ½ inch to 1, ½ inch (or more). The geothermal probe is made by a PEAD spiral tube and by a return pipeline made of the same material, the latter may eventually be insulated, co-axial to the inlet hole.

The coils are linked by flexible spacer that surround every single spire and link it to the near twos, having also the task to limit the distance during installation.

The spacers, all of the same fixed length, may be made with plastic or metal (such as chains, steel ropes) and must be resistant in traction to maintain the probe weight once installed. During transport (closed probe) they remain flexed, folded.

Lengthwise the probe, one or more spacer-sets may be assembled according to the probe length and to PEAD pipeline diameter used.

During installation the probe is set in the hole from the ground level through ropes or chains while both the delivery and the recovery pipelines are fixed at the ground level. In this way, as the probe goes deeper in the hole, the coils stretch out for gravity effect.

ADVANTAGES PROVIDED BY THE INVENTION

The closed probe, as it is assembled in works, is very easy to be transported on site.

The installation of the closed probe is very simple and quick, as a consequence, the labour cost further reduces.

This spiral probe may practically and quickly be installed into foundation pile frameworks before doing the concrete casting. The coil diameter will be minor of the pile framework diameter. An innovative energy pile is therefore obtained.

This probe type, in new buildings where pile foundations are needed, allow the construction of geothermal units impressively reducing the costs. The number of probeings executed to exclusive use of the geothermal unit results in fact reduced.

BRIEF DESCRIPTION OF THE DRAWINGS

Fig. 1 shows the heat exchanger geothermal probe as it is prepared and assembled before transportation; that is with the spiral folded within the metal cage, but with spaced coils.

Fig. 2 shows the probe installed, with coils that, as a result of the law of gravity, spaced one from the other for a distance equal to the spacer-length. The spacer function is to set the coils distance at the established value fixed during projecting.

DETAILED DESCRIPTION

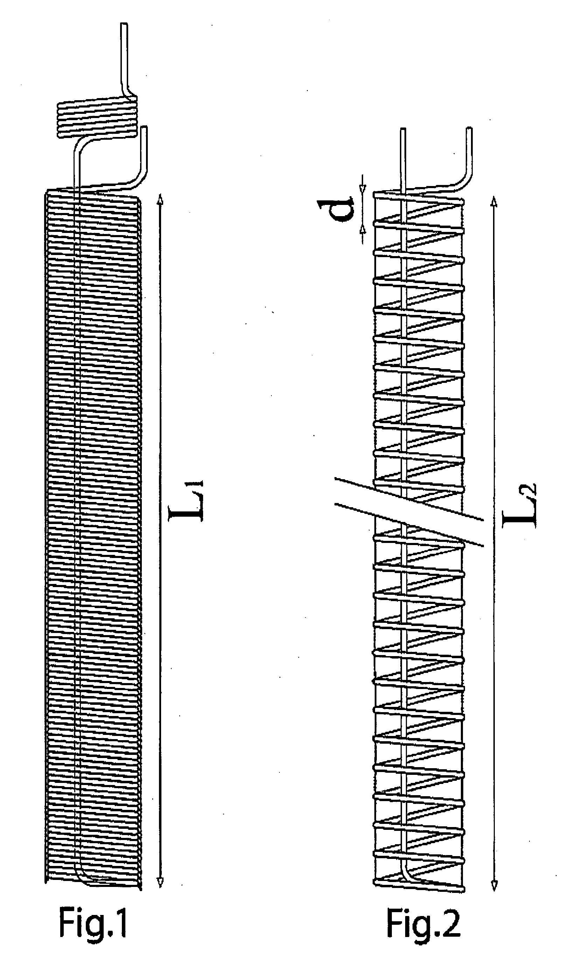

With reference to Fig. 1, the spiral, during the steps of construction, stocking and transportation to site, is compacted, the space between coils is near to zero; that is they lay one close to the other. The probe length is now $L_1$ equal to the product given by the number of spires (n) and the external diameter of PEAD pipeline $\Phi$:

$$L_1 = N \times \Phi$$

With reference to Fig. 2, during the installation process, the probe is lowered from the soil level, with the help of ropes or chains, while the delivery and recovery pipelines are maintained at the soil level. In this way, as the probe goes deeper in the hole the coils stretch out for gravity effect (or eventually helped by appropriate ballast or by mechanical units pulling the spire from the bottom of the hole in case of obstacles or of presence of water bed in the hole) and the spires move one from the other.

The maximum distance between spires, that is the spire pitch is settled by the length of flexible spacers that , during installation, stretch out to reach their maximum length and become therefore taut. The length $L_2$ in this phase is equal to the product between n (number of spires) multiplied for d, length of the folding spacer inserted between every spire couple:

$$L_2 = n \times d$$

Once the probe is on place the hole will be filled by high conductivity thermal mixture

**Claims**

1.  Geothermal probe made by PEAD spiral tube and return tube built in the same material, eventually insulated, set at the central axe of the spire. The various parts are assembled before transportation and installation.

2.  Geothermal probe as claimed in claim 1, with coils assembled closed, that is not spaced one from the other, this to transport the same very easily and consequently causing important reductions of costs during stocking and transportation phases.

3.  Geothermal probe as claimed in claim 1, with coils linked one to the other by flexible spacers having the task of fixing the maximum distance between each coil pair when stretched (once installed)

4.  Geothermal probe as claimed in claim 3, where spacers are calculated and assembled on works and able to adopt the final taut position only during installation, as a result of the law of gravity or with the help of traction from the bottom.

5.  Geothermal probe as claimed in claims 1, 2, 3 and 4 that may be installed into foundation frameworks before doing the concrete casting thus obtaining an innovative energy pile.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4741388 A, Kuroiwa
- US 5623986 A
- US 1997 A
- US 5816314 A
- US 1998 A